# EUROPÄISCHE PATENTANMELDUNG

(11) **EP 4 811 589 A1**
(43) Veröffentlichungstag der Anmeldung: **23.09.2026**
(21) Anmeldenummer: 26156324.1
(22) Anmeldetag: 04.02.2026
(51) Int. Cl.: H02J 3/32, B60L 55/00, H02J 7/34, H02J 9/06

(54) **HYBRIDE STROMVERSORGUNGSEINRICHTUNG**

(30) Priorität: 20.03.2025 DE 102025110809
(71) Anmelder: POLYMA Energiesysteme GmbH, 34117 Kassel (DE)
(72) Erfinder: Andler Osorio, Daniel Andrés, 34266 Niesetal (DE)
(74) Vertreter: Grättinger Möhring von Poschinger Patentanwälte Partnerschaft mbB

(57) **Zusammenfassung**

Die vorliegende Erfindung betrifft eine hybride mobile Stromversorgungseinrichtung (1) zur Abgabe eines Wechselstroms an einem Verbraucheranschluss (2). Sie umfasst den Verbraucheranschluss (2), eine Generatoreinheit (3) mit einem Generator (13) und einem Generatorschalter (14), eine Batterieeinheit (4) mit einer Batterie (5) und einem Batterieschalter (21), eine erste Netzeinheit (6) mit einem ersten Netzschalter (16) und einen ersten Netzanschluss (15), an dem ein Dreiphasen-Vierleiter-Stromnetz (7) anschließbar ist, eine zweite Netzeinheit (8) mit einem zweiten Netzschalter (23) und einem zweiten Netzanschluss (22), an dem ein TN-Ladenetz (9) anschließbar ist, um die Batterie (5) zu beladen, eine Wechselstromschiene (11) mit einem Primärschienenabschnitt (11.1), einem Sekundärschienenabschnitt (11.2) und einem Kuppelschalter (12) und eine Steuereinheit, mittels der die Schalter (12, 14, 16, 21, 23) schaltbar sind. Der Primärschienenabschnitt (11.1) und der Sekundärschienenabschnitt (11.2) sind durch den Kuppelschalter (12) allpolig voneinander trennbar und miteinander verbindbar.

Der Primärschienenabschnitt (11.1) weist eine Primär-PEN-Leitung (17) aufweist. Die erste Netzeinheit (6) und die Generatoreinheit (3) sind am Primärschienenabschnitt (11.1) angebunden.

Die Batterieeinheit (4), die zweite Netzeinheit (8) und der Verbraucheranschluss (2) sind am Sekundärschienenabschnitt (11.2) angebunden. Der zweite Netzanschluss (22) und der Sekundärschienenabschnitt (11.2) sind durch den zweiten Netzschalter (23) allpolig voneinander trennbar und miteinander verbindbar sind.

Die Steuereinheit (10) dazu eingerichtet ist, den zweiten Netzschalter (23) und den Kuppelschalter (12) derart zu schalten, dass bei geschlossenem zweiten Netzschalter (23), wenn also der zweite Netzanschluss (22) und der Sekundärschienenabschnitt (11.2) allpolig miteinander verbunden sind, der Kuppelschalter (12) geöffnet ist, sodass der Primärschienenabschnitt (11.1) und der Sekundärschienenabschnitt (11.2) allpolig voneinander getrennt sind.

## Beschreibung

Die vorliegende Erfindung betrifft eine hybride, insbesondere mobile, Stromversorgungseinrichtung zur Abgabe eines Wechselstroms an einem Verbraucheranschluss.

Mobile Stromversorgungseinrichtungen kommen zum Einsatz, um Verbraucher über einen Verbraucheranschluss temporär mit Strom zu versorgen, wenn die reguläre Stromversorgung nicht verfügbar ist. Die mobile Stromversorgungseinrichtung, die oftmals auf einem Fahrzeuganhänger montiert ist, kann hierzu mit Hilfe eines Zugfahrzeugs zum Einsatzort gebracht werden.

Ein typischer Anwendungsfall ist die Versorgung von Verbrauchern, die an eine Ortsnetzstation angeschlossen sind, während diese gewartet wird. Während der Wartungsarbeiten wird die Stromversorgung der Verbraucher über den Verbraucheranschluss der mobilen Stromversorgungseinrichtung sichergestellt anstatt über die Ortsnetzstation des Erzeugernetzes.

Um eine unterbrechungsfreie Stromversorgung auch während des Umschaltens zu gewährleisten, verfügt die mobile Stromversorgungseinrichtung über einen (ersten) Netzanschluss für das Erzeugernetz. Ein Erzeugernetz ist dabei typischerweise als Dreiphasenwechselstromsystem (L1, L2, L3) mit Neutralleiter (N) (Dreiphasen-Vierleitersystem) ausgeführt.

Das von der Ortsnetzstation bereitgestellte Verbrauchernetz ist typischerweise ein TN-Netz, also ein Dreiphasenwechselstromsystem (L1, L2, L3) mit Neutralleiter (N) und Schutzleiter (PE) (Fünfleitersystem), bei dem der Neutralleiter und der Schutzleiter an einer Stelle im System über eine sogenannte PEN-Brücke mit der Erde verbunden sind.

Nachdem die Ortsnetzstation zu Wartungszwecken freigeschaltet wurde, muss die mobile Stromversorgungseinheit das Erzeugernetz und die Ortsnetzstation vollständig ersetzen. Die mobile Stromversorgungseinheit muss daher aus Sicherheitsgründen eine PEN-Brücke aufweisen, die mit der Erde verbunden ist

Mobile Stromversorgungseinrichtungen sind in der Regel mit einer Generatoreinheit ausgestattet, die durch einen Verbrennungsmotor oder eine Brennstoffzelle betrieben wird. Um die Schadstoff- und CO2-Emissionen des Verbrennungsmotors zu reduzieren und einen ungünstigen Teillastbetrieb zu vermeiden, verfügen hybride Stromversorgungseinrichtungen zusätzlich über eine Batterie. Bei geringem Strombedarf der Verbraucher kann der Verbrennungsmotor abgeschaltet und der benötigte Strom aus der Batterie bereitgestellt werden.

Zum Laden der Batterie vor einem Feldeinsatz ist die mobile Stromversorgungseinrichtung mit einem zweiten Netzanschluss ausgestattet, um mit einem Ladenetz verbunden zu werden. Ein Ladenetz ist dabei typischerweise als TN-Netz ausgeführt und weist eine im Ladenetz angeordnete PEN-Brücke auf. Daher muss aus Sicherheitsgründen während des Ladevorgangs die PEN-Brücke der Stromversorgungseinrichtung entfernt werden. Dies erfolgt typischerweise durch geschultes Personal, das die PEN-Brücke vor dem Laden entfernt und nach dem Laden wieder einsetzt.

Vor dem Hintergrund dieses Standes der Technik liegt der vorliegenden Erfindung die Aufgabe zugrunde, eine hybride, mobile Stromversorgungseinrichtung bereitzustellen, die sich durch eine verbesserte Praxistauglichkeit auszeichnet, insbesondere im Hinblick auf eine Vereinfachung der Bedienbarkeit, eine Verbesserung der Arbeitssicherheit und der Zuverlässigkeit.

Gelöst wird diese Aufgabe durch die erfindungsgemäße hybride mobile Stromversorgungseinrichtung zur Abgabe eines (dreiphasigen) Wechselstroms an einem Verbraucheranschluss gemäß Anspruch 1. Besonders bevorzugte Ausführungsformen können den Unteransprüchen entnommen werden.

Die hybride, insbesondere mobile, Stromversorgungseinrichtung umfasst
- den Verbraucheranschluss,
- eine Generatoreinheit mit einem Generator und einem Generatorschalter,
- eine Batterieeinheit mit einer Batterie und einem Batterieschalter,
- eine erste Netzeinheit mit einem ersten Netzschalter und einen ersten Netzanschluss, an dem ein Stromnetz, insbesondere ein Dreiphasen-Vierleiter-Stromnetz, anschließbar ist,
- eine zweite Netzeinheit mit einem zweiten Netzschalter und einem zweiten Netzanschluss, an dem ein Ladenetz, insbesondere ein TN-Ladenetz, anschließbar ist, um die Batterie zu beladen,
- eine Wechselstromschiene mit einem Primärschienenabschnitt, einem Sekundärschienenabschnitt und einem Kuppelschalter wobei der Primärschienenabschnitt und der Sekundärschienenabschnitt durch den Kuppelschalter allpolig voneinander trennbar und miteinander verbindbar sind,
- eine Steuereinheit, mittels der zumindest der zweiteNetzschalter und der Kuppelschalter schaltbar sind,
   wobei
- der Primärschienenabschnitt eine Primär-PEN-Leitung aufweist,
- die erste Netzeinheit und die Generatoreinheit am Primärschienenabschnitt angebunden sind,
- der erste Netzanschluss und der Primärschienenabschnitt durch den ersten Netzschalter allpolig voneinander trennbar und miteinander verbindbar ist,
- der Generator und der Primärschienenabschnitt durch den Generatorschalter allpolig voneinander trennbar und miteinander verbindbar ist,
- die Batterieeinheit, die zweite Netzeinheit und der Verbraucheranschluss am Sekundärschienenabschnitt angebunden sind,
- die Batterie und der Sekundärschienenabschnitt durch den Batterieschalter allpolig voneinander trennbar und miteinander verbindbar sind,
- der zweite Netzanschluss und der Sekundärschienenabschnitt durch den zweiten Netzschalter allpolig voneinander trennbar und miteinander verbindbar sind, und
- die Steuereinheit dazu eingerichtet ist, den zweiten Netzschalter und den Kuppelschalter derart zu schalten, dass bei geschlossenem zweiten Netzschalter, wenn also der zweite Netzanschluss und der Sekundärschienenabschnitt allpolig miteinander verbunden sind, der Kuppelschalter geöffnet ist, sodass der Primärschienenabschnitt und der Sekundärschienenabschnitt allpolig voneinander getrennt sind.

Durch die synergetische Kombination der erfindungsgemäßen Merkmale kann eine hybride mobile Stromversorgungseinrichtung bereitgestellt werden, bei der durch Öffnen und Schließen des Kuppelschalters zwischen zwei Betriebsarten umgeschaltet werden kann, sodass es nicht nötig ist, die PEN-Brücke durch geschultes Personal zum Laden der Batterie zu entfernen und später wieder zu installieren.

Ist der Kuppelschalter geöffnet, so sind die beiden Abschnitte der Wechselstromschiene allpolig voneinander getrennt. Die im Bereich des Primärschienenabschnitts angeordnete PEN-Brücke ist somit elektrisch von dem Sekundärschienenabschnitt getrennt, an dem das (TN-)Ladenetz über die zweite Netzeinheit angebunden ist. Die mobile Stromversorgungseinrichtung wird somit in einer ersten Betriebsart betrieben und die Batterie kann problemlos geladen werden, ohne dass die PEN-Brücke der Stromversorgungseinrichtung aus Sicherheitsgründen entfernt werden müsste.

Wird die mobile Stromversorgungseinrichtung anschließend vom (TN-)Ladenetz abgekoppelt, zum Einsatzort verbracht und dort über die erste Netzeinheit an ein Dreiphasen-Vierleiter-Erzeugernetz angeschlossen, kann die PEN-Brücke der Stromversorgungseinrichtung sogleich verwendet werden, ohne dass sie zuvor durch geschultes Personal wieder eingesetzt werden müsste.

Auf diese Weise bedarf es also keines geschulten Personals zum Beladen der Batterie der Stromversorgungseinrichtung. Die Stromversorgungseinrichtung kann somit durch Laien geladen werden, was die Verwendung vereinfachen und Fehler verhindern und die Arbeitssicherheit sowie die Betriebssicherheit erhöhen kann. Nachfolgend werden einige Aspekte und Merkmale der hybriden mobilen Stromversorgungseinrichtung definiert und näher ausgeführt.

Unter einer hybriden Stromversorgungseinrichtung ist eine Stromversorgungseinrichtung zu verstehen, die neben einer Generatoreinheit, die beispielsweise durch einen Verbrennungsmotor oder eine Brennstoffzelle gespeist werden kann, eine Batterieeinheit aufweist, die durch die Generatoreinheit geladen werden kann und/oder deren Strom über den Verbraucheranschluss abgegeben werden kann.

Unter einer mobilen Stromversorgungseinrichtung ist eine Stromversorgungseinrichtung zu verstehen, die dazu eingerichtet ist, mit einem Zugfahrzeug zu einem Einsatzort transportiert zu werden. Die mobile Stromversorgungseinrichtung kann hierzu insbesondere auf einem Fahrzeuganhänger montiert sein.

Der Generator stellt (dreiphasigen) Wechselstrom bereit, umfasst insbesondere einen Verbrennungsmotor oder eine Brennstoffzelle, und kann durch den Generatorschalter allpolig mit dem Primärschienenabschnitt verbunden oder von diesem getrennt werden.

Die Batterieeinheit umfasst neben der Batterie und dem Batterieschalter einen bidirektionalen Umrichter, über den die Batterie an den Sekundärschienenabschnitt der Wechselstromschiene anschließbar ist. Ein bidirektionaler Umrichter ist ein Gerät, das in der Lage ist, elektrische Energie von Gleichstrom (DC) zu Wechselstrom (AC) und umgekehrt zu übertragen. Durch den Batterieschalter kann die Batterie bzw. der bidirektionale Umrichter allpolig mit dem Sekundärschienenabschnitt verbunden oder von diesem getrennt werden.

Ein Dreiphasen-Vierleiter-Stromnetz ist ein Dreiphasenwechselstromsystem (L1, L2, L3) mit Neutralleiter (N) und wird vorliegend auch als Erzeuger(strom)netz bezeichnet.

Ein TN-Netz ist ein Dreiphasenwechselstromsystem (L1, L2, L3) mit Neutralleiter (N) und Schutzleiter (PE), bei dem der Neutralleiter und der Schutzleiter an einer Stelle im System über eine sogenannte PEN-Brücke mit der Erde (Erdpotenzial) verbunden sind.

Die Wechselstromschiene weist insbesondere vier Leiter (Pole) auf, nämlich drei Phasenleiter (L1, L2, L3) und einen gemeinsamen Leiter für den Neutralleiter (N) und den Schutzleiter (PE). Es ist auch denkbar, dass die Wechselstromschiene fünf Leiter (Pole) aufweist, nämlich drei Phasenleiter (L1, L2, L3) und einen separaten Neutralleiter (N) und Schutzleiter (PE).

Unter einer allpoligen Trennung bzw. Verbindung zweier Netzabschnitte ist einer Trennung bzw. Verbindung aller Leiter (Pole) der beiden Netzabschnitte zu verstehen.

Unter eine PEN-Leitung ist eine PEN-Brücke zu verstehen, die den Neutralleiter und den Schutzleiter miteinander verbindet und an die elektrische Erde, also an den Erdungspunkt, das Erdpotenzial, angeschlossen werden kann.

Ein Erdungspunkt bezeichnet einen physischen Punkt, an dem ein elektrischer Leiter mit der Erde verbunden ist, um ein Erdungssystem zu bilden. Der Erdungspunkt kann insbesondere als Erdungselektrode ausgeführt sein, die in den Erdboden eingebracht wird, um eine elektrische Verbindung zum Erdpotenzial herzustellen.

Gemäß einer ersten bevorzugten Ausführungsform der Erfindung ist vorgesehen, dass
- die Steuereinheit zwei Messvorrichtungen aufweist, die dazu geeignet sind, den Spannungsverlauf im Primärschienenabschnitt und im Sekundärschienenabschnitt zu erfassen, und
- die Steuereinheit derart eingerichtet ist, dass der Kuppelschalter nur dann geschlossen wird, wenn die Spannungsverläufe im Primärschienenabschnitt und im Sekundärschienenabschnitt synchron sind.

Auf diese Weise kann ermöglicht werden, dass beide Abschnitte der Wechselstromschiene synchronisiert sind, bevor sie durch Schließen des Kuppelschalters allpolig miteinander verbunden werden.

Weiterhin kann vorgesehen sein, dass der Verbraucheranschluss einen Fehlerstrom-Schutzschalter (RCD) aufweist.

Ein Fehlerstrom-Schutzschalter, auch RCD (Residual Current Device) genannt, ist eine elektrische Sicherheitsvorrichtung, die dazu dient, Personen vor elektrischen Schlägen zu schützen, die durch Fehlerströme verursacht werden können. Der Fehlerstrom-Schutzschalter überwacht hierzu kontinuierlich den Stromfluss in einem Netzabschnitt und erkennt Differenzen zwischen dem einfließenden und dem abfließenden Strom, die auf einen Fehlerstrom hinweisen. Wird ein Fehlerstrom erkannt, der einen vordefinierten Schwellwert überschreitet, wird der Stromkreis innerhalb von Millisekunden unterbrochen.

Zudem kann die hybride Stromversorgungseinrichtung in vorteilhafter weise dazu geeignet sein, Wechselstrom über den ersten Netzanschluss an ein dort angeschlossenes Stromnetz, insbesondere ein Dreiphasen-Vierleiter-Stromnetz, abzugeben.

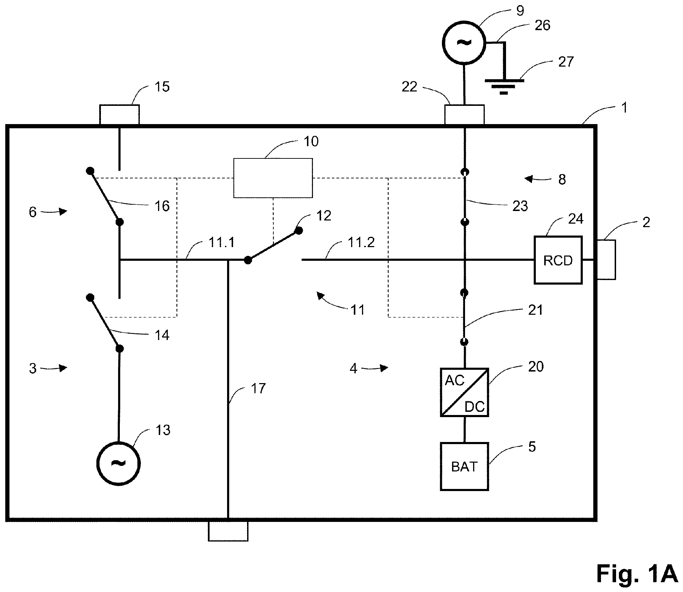

Nachfolgend wird ein Ausführungsbeispiel einer erfindungsgemäßen hybriden mobilen Stromversorgungseinrichtung anhand der Zeichnung näher erläutert. Dabei zeigt
- Fig. 1A - 2B: das Schaltschema des ersten Ausführungsbeispiels in unterschiedlichen Betriebszuständen.

Die hybride mobile Stromversorgungseinrichtung 1 umfasst einen Verbraucheranschluss 2, eine Generatoreinheit 3, eine Batterieeinheit 4 mit einer Batterie 5, eine erste Netzeinheit 6, an der ein Dreiphasen-Vierleiter-Stromnetz 7 anschließbar ist, eine zweite Netzeinheit 8, an der ein TN-Ladenetz 9 anschließbar ist, um die Batterie 5 zu beladen, eine Steuereinheit 10 und eine Wechselstromschiene 11 mit einem Primärschienenabschnitt 11.1, einem Sekundärschienenabschnitt 11.2 und einem Kuppelschalter 12.

Die Wechselstromschiene 11 umfasst drei Leiterphasen, einen Neutralleiter und einen Schutzleiter. Der Primärschienenabschnitt 11.1 und der Sekundärschienenabschnitt 11.2 können durch den Kuppelschalter 12 allpolig voneinander getrennt und miteinander verbunden werden.

Die Generatoreinheit 3 weist einen Generator 13 mit einem Verbrennungsmotor und einen Generatorschalter 14 auf. Der Generator 13 stellt dreiphasige Wechselspannung bereit und kann über den Generatorschalter 14 mit dem Primärschienenabschnitt 11.1 der Wechselstromschiene 11 allpolig verbunden bzw. davon getrennt werden.

Die erste Netzeinheit 6 umfasst einen ersten Netzanschluss 15 und einen ersten Netzschalter 16. Am ersten Netzanschluss 15 kann das Dreiphasen-Vierleiter-Stromnetz 7 angeschlossen werden. Durch den ersten Netzschalter 16 können der erste Netzanschluss 15 und der Primärschienenabschnitt 11.1 allpolig voneinander getrennt oder miteinander verbunden werden. Die hybride Stromversorgungseinrichtung 1 ist dazu geeignet, Wechselstrom über den ersten Netzanschluss 15 an das dort angeschlossenes Dreiphasen-Vierleiter-Stromnetz 7 abzugeben.

Der Primärschienenabschnitt 11.1 weist eine Primär-PEN-Leitung 17 auf, die den Neutralleiter und den Schutzleiter der Wechselstromschiene 11 miteinander verbindet und an einem ersten Erdungspunkt 18 angeschlossen werden kann.

Die Batterieeinheit 4 umfasst die (selbstverständlich wiederaufladbare) Batterie, einen bidirektionalen Umrichter 20 und einen Batterieschalter 21. Durch den Batterieschalter 21 kann der bidirektionale Umrichter 20 allpolig mit dem Sekundärschienenabschnitt 11.2 verbunden oder von diesem getrennt werden.

Die zweite Netzeinheit 8 umfasst einen zweiten Netzanschluss 22 und einen zweiten Netzschalter 23. Am zweiten Netzanschluss 22 kann das TN-Ladenetz 9 angeschlossen werden, um die Batterie 5 der Batterieeinheit 4 zu laden. Durch den zweiten Netzschalter 23 können der zweite Netzanschluss 22 und der Sekundärschienenabschnitt 11.2 allpolig voneinander getrennt oder miteinander verbunden werden.

Der Verbraucheranschluss 2 ist am Sekundärschienenabschnitt 11.2 angeschlossen und stellt ein TN-Netz bereit und weist drei Wechselstromphasen, einen Neutralleiter und einen Schutzleiter auf. Der Verbraucheranschluss 2 umfasst zudem einen Fehlerstrom-Schutzschalter (RCD) 24. Am Verbraucheranschluss 2 kann ein Verbraucher 25 angeschlossen sein.

Die Steuereinheit 10 ist dazu geeignet, die Schalter, nämlich den Generatorschalter 14, den Batterieschalter 21, den Kuppelschalter 12, den zweiten Netzschalter 23 und den ersten Netzschalter 16, zu schalten und derart eingerichtet, dass bei geschlossenem zweiten Netzschalter 23, wenn also der zweite Netzanschluss 22 und der Sekundärschienenabschnitt 11.2 allpolig miteinander verbunden sind, der Kuppelschalter 12 geöffnet ist, sodass der Primärschienenabschnitt 11.1 und der Sekundärschienenabschnitt 11.2 allpolig voneinander getrennt sind.

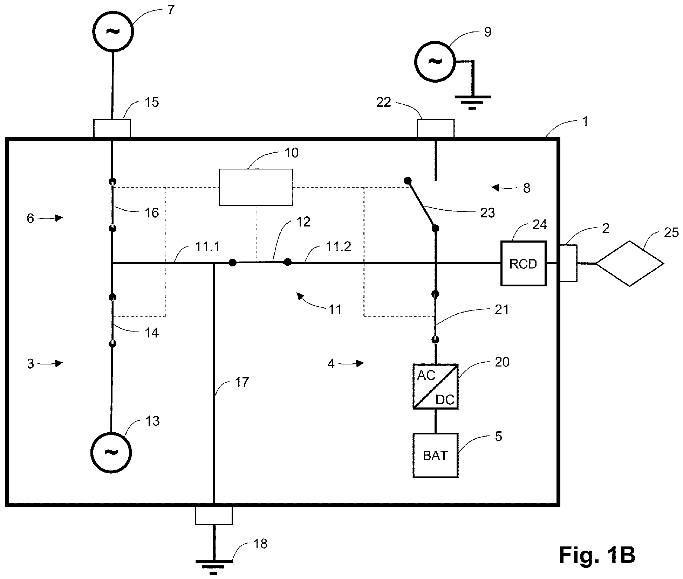

Figur 1A zeigt das erste Ausführungsbeispiel der hybriden mobilen Stromversorgungseinrichtung 1 im "Ladebetrieb", Figur 1B hingegen im "Versorgungsbetrieb".

Im Ladebetrieb gemäß Figur 1A ist das TN-Ladenetz 9 am zweiten Netzanschluss 22 angeschlossen. Das TN-Ladenetz 9 weist eine PEN-Brücke 26 auf, die den Schutzleiter und den Neutralleiter über den zweiten Erdungspunkt 27 mit dem Erdpotenzial verbindet.

Der zweite Netzschalter 23 und der Batterieschalter 21 sind geschlossen. sodass die Batterie 5 über den bidirektionalen Umrichter 20 durch das TN-Ladenetz 9 geladen werden kann. Das TN-Ladenetz 9 und der Umrichter 20 sind allpolig mit dem Sekundärschienenabschnitt 11.2 der Wechselstromschiene 11 verbunden.

Die Steuereinheit 10 ist derart eingerichtet, dass bei geschlossenem zweiten Netzschalter 23 der Kuppelschalter 12 geöffnet ist. Der Primärschienenabschnitt 11.1 und der Sekundärschienenabschnitt 11.2 sind somit allpolig voneinander getrennt. Während im Bereich des Primärschienenabschnitts 11.1, der Neutralleiter und der Schutzleiter über die Primär-PEN-Brücke 17 miteinander verbunden sind, so ist dies im abgekuppelten Sekundärschienenabschnitt 11.2 nicht der Fall. Der in Figur 1A dargestellte Ladebetrieb stellt sich beispielsweise ein, wenn der mobile Stromversorgungseinrichtung 1 auf einem Werksgelände auf einen anstehenden Einsatz vorbereitet wird, indem die Batterie 5 der Stromversorgungseinrichtung 1 geladen wird. Das TN-Ladenetz 9 kann dabei insbesondere über einen CEE-Stecker, einen IEC-Stecker oder einen Typ2-Stecker an den zweiten Netzanschluss 22 angeschlossen werden.

Am Einsatzort wird die Stromversorgungseinrichtung 1 in den netzparallelen Versorgungsbetrieb versetzt, der in Figur 1B dargestellt ist.

Am zweiten Netzanschluss 22 ist nunmehr kein Ladenetz mehr angeschlossen und der zweite Netzschalter 23 ist geöffnet. Jetzt ist allerdings am ersten Netzanschluss 15 das Dreiphasen-Vierleiter-Stromnetz 7 (Erzeugernetz) angeschlossen.

Der erste Netzschalter 16, der Generatorschalter 14, der Batterieschalter 21 und der Kuppelschalter 12 sind geschlossen. Der Generator 13 liefert mit dem Erzeugernetz 7 synchronisierten Wechselstrom, die Batterie 5 kann abhängig von der Ansteuerung durch die Steuereinheit 10 Leistung aufnehmen und beladen werden oder Leistung abgeben und entladen werden. Am Verbraucheranschluss 2 sind Verbraucher 25 angeschlossen.

Die Primär-PEN-Leitung 17 ist über den ersten Erdungspunkt 18 mit dem Erdpotenzial verbunden, sodass den Verbrauchern 25 am Verbraucheranschluss 2 ein TN-Netz bereitgestellt werden kann.

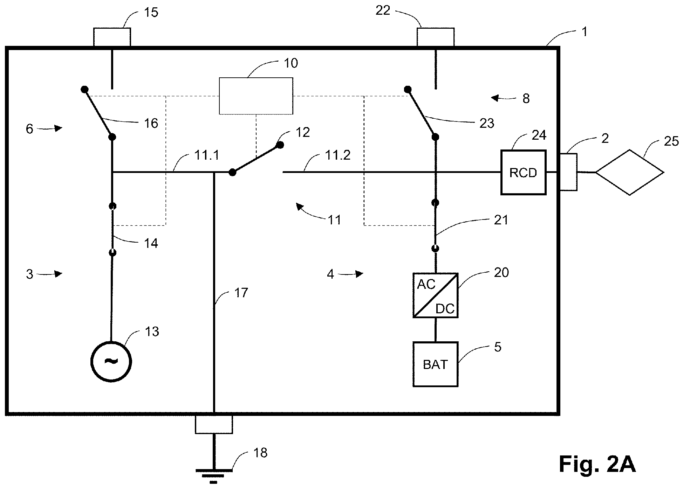

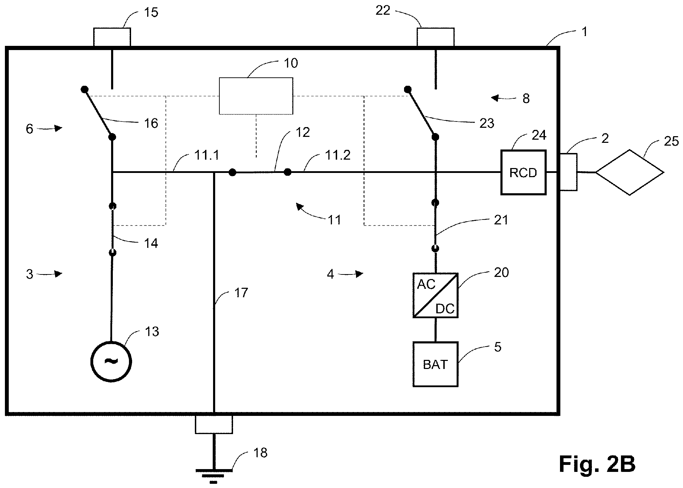

Der Kuppelschalter 12 kann auch in vorteilhafter Weise zum Einsatz kommen, wenn die Stromversorgungseinrichtung 1 gemäß den Figuren 2A und 2B im Inselbetrieb Verbraucher versorgt.

Gemäß Figur 2A werden die am Verbraucheranschluss 2 angeschlossenen Verbraucher 25 über die Batterie 5 und den Umrichter 20 mit Wechselspannung versorgt. Wenn nun die Generatoreinheit 3 die Stromversorgung der Verbraucher 25 (zumindest teilweise) übernehmen soll, ist die Generatoreinheit 3 durch Schließen des Kuppelschalters 12 mit dem Verbraucheranschluss 2 zu verbinden. Die Steuereinheit 10 ist aus Sicherheitsgründen dazu eingerichtet, den Kuppelschalter 12 erst dann zu schließen, wenn die Spannungsverläufe im Primärschienenabschnitt 11.1 und im Sekundärschienenabschnitt 11.2 synchron sind. Hierzu weist die Steuereinheit 10 zwei Messvorrichtungen auf, die dazu geeignet sind, den Spannungsverlauf im Primärschienenabschnitt 11.1 und im Sekundärschienenabschnitt 11.2 zu erfassen.

### Bezugszeichenliste

| | |
|---|---|
| Stromversorgungseinrichtung | 1 |
| Verbraucheranschluss | 2 |
| Generatoreinheit | 3 |
| Batterieeinheit | 4 |
| Batterie | 5 |
| erste Netzeinheit | 6 |
| Dreiphasen-Vierleiter-Stromnetz | 7 |
| zweite Netzeinheit | 8 |
| TN-Ladenetz | 9 |
| Steuereinheit | 10 |
| Wechselstromschiene | 11 |
| Primärschienenabschnitt | 11.1 |
| Sekundärschienenabschnitt | 11.2 |
| Kuppelschalter | 12 |
| Generator | 13 |
| Generatorschalter | 14 |
| ersten Netzanschluss | 15 |
| ersten Netzschalter | 16 |
| Primär-PEN-Leitung | 17 |
| ersten Erdungspunkt | 18 |
| bidirektionalen Umrichter | 20 |
| Batterieschalter | 21 |
| zweiter Netzanschluss | 22 |
| zweiter Netzschalter | 23 |
| Fehlerstrom-Schutzschalter | 24 |
| Verbraucher | 25 |
| PEN-Brücke | 26 |
| zweiten Erdungspunkt | 27 |

## Patentansprüche

1. Hybride, insbesondere mobile, Stromversorgungseinrichtung (1) zur Abgabe eines Wechselstroms an einem Verbraucheranschluss (2) umfassend
- den Verbraucheranschluss (2),
- eine Generatoreinheit (3) mit einem Generator (13) und einem Generatorschalter (14),
- eine Batterieeinheit (4) mit einer Batterie (5) und einem Batterieschalter (21),
- eine erste Netzeinheit (6) mit einem ersten Netzschalter (16) und einen ersten Netzanschluss (15), an dem ein Stromnetz, insbesondere ein Dreiphasen-Vierleiter-Stromnetz (7), anschließbar ist,
- eine zweite Netzeinheit (8) mit einem zweiten Netzschalter (23) und einem zweiten Netzanschluss (22), an dem ein Ladenetz, insbesondere ein TN-Ladenetz (9), anschließbar ist, um die Batterie (5) zu beladen,
- eine Wechselstromschiene (11) mit einem Primärschienenabschnitt (11.1), einem Sekundärschienenabschnitt (11.2) und einem Kuppelschalter (12), und
- eine Steuereinheit (10), mittels der zumindest der zweite Netzschalter (23) und der Kuppelschalter (12) schaltbar sind,
wobei
- der Primärschienenabschnitt (11.1) und der Sekundärschienenabschnitt (11.2) durch den Kuppelschalter (12) allpolig voneinander trennbar und miteinander verbindbar sind,
- der Primärschienenabschnitt (11.1) eine Primär-PEN-Leitung (17) aufweist,
- die erste Netzeinheit (6) und die Generatoreinheit (3) am Primärschienenabschnitt (11.1) angebunden sind,
- der erste Netzanschluss (15) und der Primärschienenabschnitt (11.1) durch den ersten Netzschalter (16) allpolig voneinander trennbar und miteinander verbindbar ist,
- der Generator (13) und der Primärschienenabschnitt (11.1) durch den Generatorschalter (14) allpolig voneinander trennbar und miteinander verbindbar ist,
- die Batterieeinheit (4), die zweite Netzeinheit (8) und der Verbraucheranschluss (2) am Sekundärschienenabschnitt (11.2) angebunden sind,
- die Batterie (5) und der Sekundärschienenabschnitt (11.2) durch den Batterieschalter (21) allpolig voneinander trennbar und miteinander verbindbar sind,
- der zweite Netzanschluss (22) und der Sekundärschienenabschnitt (11.2) durch den zweiten Netzschalter (23) allpolig voneinander trennbar und miteinander verbindbar sind, und
- die Steuereinheit (10) dazu eingerichtet ist, den zweiten Netzschalter (23) und den Kuppelschalter (12) derart zu schalten, dass bei geschlossenem zweiten Netzschalter (23), wenn also der zweite Netzanschluss (22) und der Sekundärschienenabschnitt (11.2) allpolig miteinander verbunden sind, der Kuppelschalter (12) geöffnet ist, sodass der Primärschienenabschnitt (11.1) und der Sekundärschienenabschnitt (11.2) allpolig voneinander getrennt sind.

2. Hybride Stromversorgungseinrichtung (1) nach Anspruch 1, wobei
- die Steuereinheit (10) zwei Messvorrichtungen aufweist, die dazu geeignet sind, den Spannungsverlauf im Primärschienenabschnitt (11.1) und im Sekundärschienenabschnitt (11.2) zu erfassen, und
- die Steuereinheit (10) derart eingerichtet ist, dass der Kuppelschalter (12) nur dann geschlossen wird, wenn die Spannungsverläufe im Primärschienenabschnitt (11.1) und im Sekundärschienenabschnitt (11.2) synchron sind.

3. Hybride Stromversorgungseinrichtung (1) nach einem der voranstehenden Ansprüche, wobei der Verbraucheranschluss (2) einen Fehlerstrom-Schutzschalter (24) aufweist.

4. Hybride Stromversorgungseinrichtung (1) nach einem der voranstehenden Ansprüche, dazu geeignet, Wechselstrom über den ersten Netzanschluss (15) an ein dort angeschlossenes Stromnetz, insbesondere ein Dreiphasen-Vierleiter-Stromnetz (7), abzugeben.
